# EUROPÄISCHE PATENTSCHRIFT

(11) **EP 2 513 991 B1**
(45) Veröffentlichungstag und Bekanntmachung des Hinweises auf die Patenterteilung: **02.04.2014**
(21) Anmeldenummer: 10771035.2
(22) Anmeldetag: 27.10.2010
(51) Int. Cl.: H01L 41/113, H02N 1/08

(54) **ELEKTROAKTIVER POLYMERGENERATOR ZUR WANDLUNG VON MECHANISCHER ENERGIE IN ELEKTRISCHE ENERGIE**
ELECTROACTIVE POLYMER GENERATOR FOR CONVERTING MECHANICAL ENERGY INTO ELECTRICAL ENERGY
GÉNÉRATEUR À POLYMÈRES ÉLECTROACTIFS DESTINÉ À CONVERTIR DE L'ÉNERGIE MÉCANIQUE EN ÉNERGIE ÉLECTRIQUE

(30) Priorität: 18.12.2009 DE 102009058984
(43) Veröffentlichungstag der Anmeldung: 24.10.2012
(73) Patentinhaber: Robert Bosch GmbH, 70469 Stuttgart (DE)
(72) Erfinder: HAGEMANN, Benjamin, 70839 Gerlingen (DE); FASS, Ulrich, 54296 Trier (DE); STEINLECHNER, Siegbert, 71229 Leonberg (DE); SCHWARZMANN, Dieter, 74081 Heilbronn (DE); HERRMANN, Tobias, 63741 Aschaffenburg (DE); SERBAN, Ioan, 71640 Ludwigsburg (DE)
(74) Vertreter: Thürer, Andreas
(86) Internationale Anmeldenummer: PCT/EP2010/006549
(87) Internationale Veröffentlichungsnummer: WO 2011/072770

(56) Entgegenhaltungen:
- WO-A1-2008/135351
- US-A1- 2007 257 490
- US-A1- 2010 236 329

## Beschreibung

Die Erfindung betrifft einen elektroaktiven Polymergenerator zur Wandlung von mechanischer Energie in elektrische Energie beim Dehnen und Stauchen des Polymergenerators. Dabei weist der Polymergenerator eine Vorrichtung zur Erfassung von Dehnungs- und Stauchungszuständen auf.

In der Druckschrift WO 2007/130252 A2 wird ein Generatorsystem beschrieben, in dem elektroaktive Polymere zur Wandlung des Wellenhubes in elektrische Energie genutzt werden. Da die elektrische Ansteuerung des elektroaktiven Polymers in Zusammenwirken eines aktuellen Dehnungszustands des Polymergenerators mit einem Steuergerät des Polymergenerators zu erfolgen hat, wird in der Druckschrift US 2007/0257490 A1 ein Positionssensor für die Positionsbestimmung des elektroaktiven Polymers eingesetzt, über den die Ansteuerung des Polymergenerators mit Hilfe des Steuergeräts gesteuert wird.

Die reine Positionsbestimmung mit einem Positionssensor hat den Nachteil, dass nur Bewegungen, die sich auf einen einzigen Freiheitsgrad beziehen, berücksichtigt werden.

Aufgabe der Erfindung ist es, einen elektroaktiven Polymergenerator anzugeben, in dem mit alternativen Methoden und Sensoren Dehnungszustände und Stauchungszustände des Polymergenerators erfasst werden können und zur Steuerung des Polymergenerators beitragen.

Diese Aufgabe wird mit dem unabhängigen Anspruch 1 gelöst. Vorteilhafte Weiterbildungen der Erfindung ergeben sich aus den abhängigen Ansprüchen.

Erfindungsgemäß wird ein elektroaktiver Polymergenerator zur Wandlung von mechanischer Energie in elektrische Energie beim Dehnen und Stauchen des Polymergenerators zur Verfügung gestellt. Der Polymergenerator weist eine Vorrichtung zur Erfassung von Dehnungsund/oder Stauchungszuständen auf. Die Vorrichtung umfasst mindestens einen Beschleunigungssensor.

Mit dieser Lösung ist der Vorteil verbunden, dass die Erfassung der Dehnungs- und Stauchungszustände des elektroaktiven Polymergenerators mit Hilfe mindestens eines Beschleunigungssensors erfolgt, womit eine höhere Präzision der Erfassung der Dehnungsund Stauchungszustände verbunden ist und damit eine verbesserte Effizienz der Energiewandlung erreicht wird, zumal eine verbesserte Steuerung des elektroaktiven Polymergenerators nun möglich ist. Die Beschleunigung kann über Integration in eine Geschwindigkeit und durch weitere Integration schließlich in eine Positionsbestimmung umgerechnet werden und ist nicht auf eine Bewegungsrichtung beschränkt. Dadurch können auch komplexe mehrdimensionale Bewegungsmuster erfasst und Dehnungszustände überwacht werden, wenn eine größere Anlage aus mehreren mechanisch miteinander verbundenen elektroaktiven Polymergeneratoren konzipiert wird.

Der einzelne elektroaktive Polymergenerator weist ein dielektrisches Elastomer und Elektroden aus einem flexiblen elektrisch leitenden Material auf, welches den Dehnungen und Stauchungen des Elastomers folgt. Die Abführung von generierten Ladungen von dem Elastomer über entsprechend flexible Elektroden, die den Verformungen, Dehnungen und Stauchungen des elektroaktiven Polymergenerators folgen können, wird zuverlässig sichergestellt.

In einer Ausführungsform der Erfindung signalisiert der Beschleunigungssensor bei einer Umkehr der Dehnung des Polymergenerators einen Maximalwert, wobei in diesem weitgehend maximalen Dehnungszustand des elektroaktiven Polymergenerators eine maximale Spannung erreicht wird.

Ferner ist es vorgesehen, dass die Vorrichtung zur Erfassung von Dehnungs- und Stauchungszuständen einen dreidimensionalen Beschleunigungssensor aufweist. Damit können Dehnungs- und Stauchungszustände räumlich erfasst und die Effizienz des Polymergenerators optimiert werden. Darüber hinaus ist es möglich, mit einer Mehrzahl von Beschleunigungssensoren komplexe mehrdimensionale Bewegungsmuster und Dehnungszustände von mechanisch gekoppelten elektroaktiven Polymergeneratoren zu erfassen, zu überwachen, zu steuern und im Sinne der Wandlung von mechanischer Energie in elektrische Energie zu optimieren. Mit einem dreidimensionalen Beschleunigungssensor ist ein Erfassen von mehrdimensionalen Relativbewegungen und eine noch bessere Überwachung eines Dehnungszustands des elektroaktiven Polymergenerators und eine verbesserte Ansteuerung des Generators möglich.

Eine Verwendung von elektroaktiven Polymergeneratoren ist ihr Einsatz in einer Wellenenergieanlage. Dabei ist der elektroaktive Polymergenerator bzw. Kondensator typischerweise zwischen mindestens zwei Endstücken eingespannt. Ändern diese Endstücke ihre Relativposition, so führt dies zu einer Änderung des Dehnungszustands in dem elektroaktiven Polymergenerator. Diese Änderung kann zur Energiegewinnung genutzt werden, wenn im Zustand weitgehend maximaler Dehnung, das heißt große Kapazität bei großer Fläche und kleinem Abstand, ein Maximum an elektrischen Ladungen auf den Elektroden des elektroaktiven Polymergenerators gebracht werden und im Zustand weitgehend maximaler Entspannung energiegewinnend abgeführt werden können. Diese beiden Zustände können zuverlässig und präzise mit dem Beschleunigungssensor detektiert werden, da es sich hierbei typischerweise um Umkehrpunkte handelt, bei denen die Dehnung bzw. Stauchung ein Maximum erreicht.

Werden mehrdimensionale Relativbewegungen zwischen bewegten Abschnitten einer Generatoranlage mit einer Vielzahl von Polymergeneratoren durchfahren, wenn beispielsweise eine Wellenenergieanlage mehrere unabhängig angesteuerte elektroaktive Polymergeneratoren aufweist, so kann in jedem bewegten Abschnitt einer derartigen Anlage ein Beschleunigungssensor angebracht sein, mit dem die Relativbewegung der unabhängig voneinander angesteuerten elektroaktiven Polymergeneratoren zueinander bestimmt und damit die Ansteuerung für jeden einzelnen elektroaktiven Polymergenerator optimal ausgelegt werden kann.

In einer Ausführungsform der Erfindung überträgt das Steuergerät bei Dehnungsrichtungsumkehr von dem elektroaktivem Polymer Ladungen auf einen Zwischenspeicher, wobei der Zwischenspeicher ein Ladekondensator ist.

Ferner wird in vorteilhafter Weise dem Steuergerät bei Umkehr einer Dehnung des elektroaktiven Polymergenerators in eine mechanische Entlastungsphase durch den Beschleunigungssensor signalisiert, so dass die Generatorschaltung darauf reagieren kann.

Eine Wellenenergieanlage mit elektroaktiven Polymergeneratoren kann als Wellenfolger in einem Wellengang angeordnet sein. Die Polymergeneratoren können eine gemeinsame Generatorschaltung mit einer Ladebatterie, einem Zwischenspeicher und einem Steuergerät aufweisen. Das Steuergerät überträgt, abhängig vom Wellengang und den von dem Wellengang verursachten Beschleunigungen an den Polymergeneratoren, Ladungen auf den Zwischenspeicher und/oder lädt die Ladebatterie auf und/oder speist eine Last.

Die Erfindung wird nun anhand der beigefügten Figuren näher erläutert.
- Figur 1: zeigt mit den Figuren 1A bis 1D Möglichkeiten der Zeit und ortsabhängigen Krafteinwirkung auf eingespannte Polymergeneratoren;
- Figur 2: zeigt eine mögliche Verwendung eines elektroaktiven Polymergenerators in einer Wellenenergieanlage.

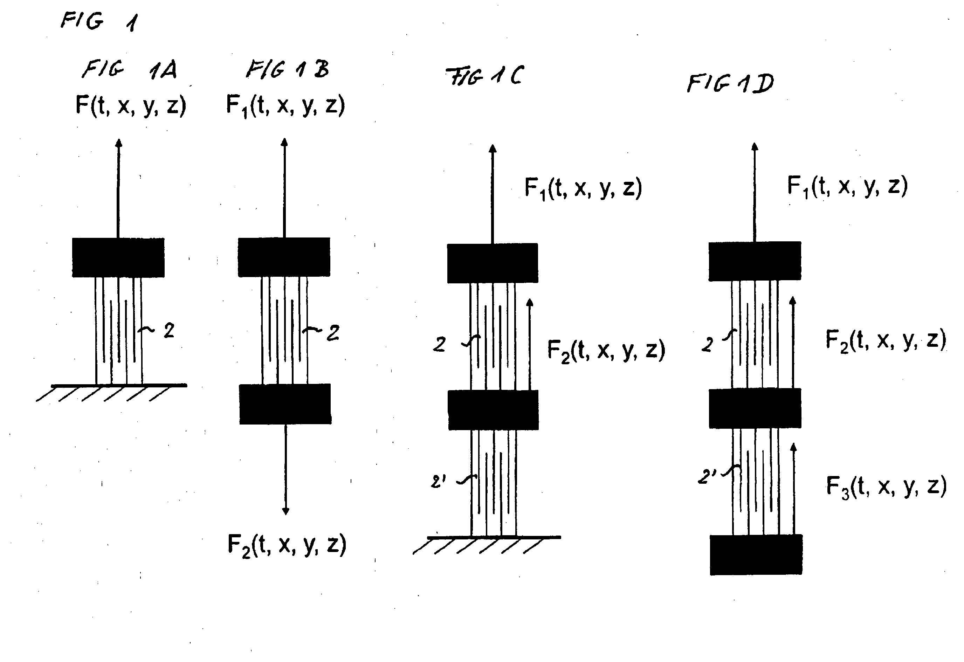

Figur 1 zeigt mit den Figuren 1A bis 1D Möglichkeiten der Zeit und ortsabhängigen Krafteinwirkung F(t,x,y,z) auf eingespannte Polymergeneratoren 2. Dazu ist der Polymergenerator 2 in Figur 1A auf einem Ende fixiert und eine Kraft F₁(t,x,y,z) dehnt oder staucht den Polymergenerator 2, wobei der Dehnungs- bzw. Stauchzustand mittels eines auf dem schwarzen Endstück montierten Beschleunigungssensors erfasst wird.

In Figur 1B ist der Polymergenerator 2 an beiden Enden an bewegten Teilen befestigt, so dass mittels zwei Beschleunigungssensoren die Dehnungs- bzw. Stauchzustände, die durch die entgegengesetzt gerichteten Kräfte F₁(t,x,y,z) und F₂(t,x,y,z) verursacht werden, zu erfassen sind.

Werden wie in Figur 1C zwei elektroaktive Polymergeneratoren 2 und 2' in Serie hintereinander gegenüber einem fixierten Ende eingespannt, so können von den Kräften F₁(t,x,y,z) und F₂(t,x,y,z) verursachte Dehnungs- bzw. Stauchzustände der beiden elektroaktiven Polymergeneratoren durch zwei Beschleunigungssensoren erfasst werden.

Werden die in Figur 1D gezeigten elektroaktiven Polymergeneratoren 2 und 2' in Serie hintereinander an bewegten Teilen eingespannt, so können von den wirksamen Kräften F₁(t,x,y,z), F₂(t,x,y,z) und F₃(t,x,y,z) verursachte Dehnungs- bzw. Stauchzustände der beiden elektroaktiven Polymergeneratoren 2 und 2' durch drei Beschleunigungssensoren erfasst werden.

In den Figuren 1A bis 1D sind Vierfachkondensatoren beispielhaft dargestellt, ohne dass dies beschränkend sein soll.

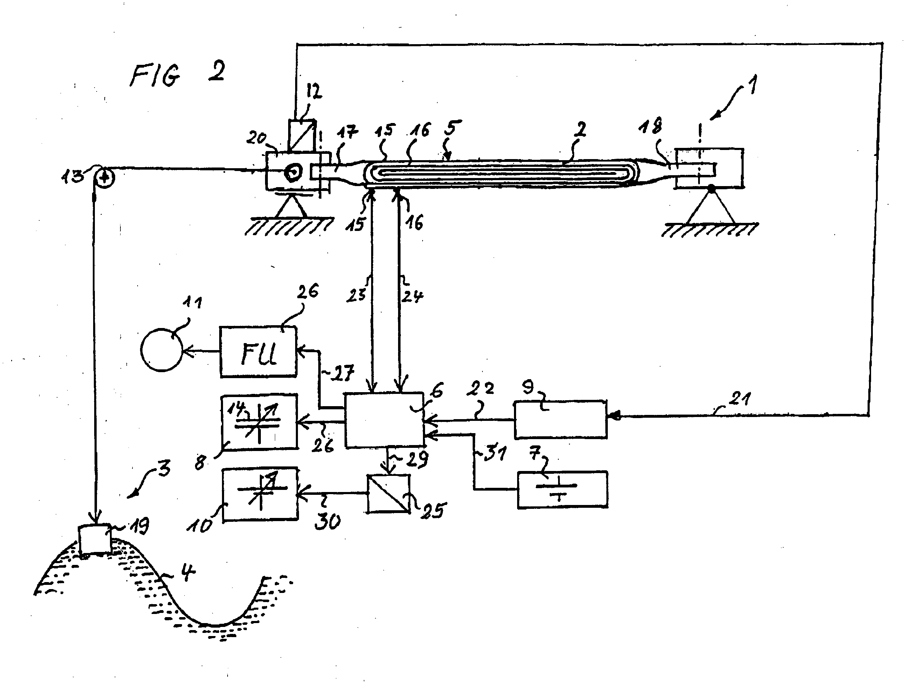

Figur 2 zeigt eine mögliche Verwendung eines elektroaktiven Polymergenerators 2 in einer Wellenenergieanlage 1. Dieser elektroaktive Polymergenerator 2 ist in dieser Ausführungsform der Wellenenergieanlage zu einem flachen Kondensator 5 aufgewickelt. Dazu ist ein elektroaktives Elastomerfolienband einseitig mit einer Elektrode 15 und einer Gegenelektrode 16 beschichtet, die bei geeigneter Strukturierung der Elektroden und geeigneter Wickeltechnik des elektroaktiven Elastomerfolienbandes einander gegenüber liegen und aufgrund des dazwischen angeordneten elektroaktiven Elastomers eine variable Kapazität bilden.

Durch die einseitige Aufbringung der Elektrode 15 und Gegenelektrode 16 kann der flache aufgewickelte Kondensator 5 mit elektroaktivem Elastomer problemlos kontaktiert werden. Der flexible elektroaktive Polymergenerator 2 aus Elektrode, Gegenelektrode und elektroaktivem Elastomer ist auf seinen Randseiten 17 und 18 verstärkt und in eine Halterung eingespannt, wobei an der Randseite 18 ein Beschleunigungssensor 12 angeordnet ist, der die beschleunigten Bewegungen des flexiblen elektroaktiven Polymers 2 erfasst und damit die Dehnungs- und Stauchungszustände präzise und zuverlässig ermittelt.

Diese Bewegungen werden von einem Wellengang 4 verursacht, in dem ein Schwimmkörper 19 angeordnet ist und einen Wellenfolger 3 bildet, dessen Bewegungen durch ein Umlenkelement 13 und ein Koppelelement 20 auf den flexiblen elektroaktiven Polymergenerator 2 übertragen werden. Bei einer Belastung des flexiblen elektroaktiven Polymergenerators 2 wird die elektroaktive Elastomerfolie gedehnt. Auf dem Koppelelement 20 ist ein Beschleunigungssensor 12 aufgebraucht, der die Bewegungen des Polymergenerators 2 aufnimmt. Diese Beschleunigungen werden über eine Signalleitung 21 an ein Steuergerät 9 signalisiert.

Das Steuergerät 9 ist mit einer Generatorschaltung 6 über eine Steuerleitung 22 verbunden, wobei die Generatorschaltung 6 zusätzlich die Elektroden 15 und 16 über Stromzuführungen 23 und 24 lädt und entlädt. Außerdem sorgt in einer Startphase des Kondensators eine Versorgungsbatterie 7, die über eine Versorgungsleitung 31 mit der Generatorschaltung 6 verbunden ist, für eine Anfangsfeldstärke in dem elektroaktiven Polymergenerator 2. Die Generatorschaltung 6 kann über eine Verbindungsleitung 29 und einen DC/DC-Wandler 25 die gewonnenen Ladungen einer Ladebatterie 10 über eine weitere Verbindungsleitung 30 zuführen. Alternativ ist es auch möglich, über eine Ableitung 26 die gewonnenen Ladungen auf einem Ladekondensator 14 eines Zwischenspeichers 8 zu speichern.

Weiterhin ist es vorgesehen, dass die Generatorschaltung über eine elektrische Leitung 27 mit einem Frequenzumformer 26 elektrisch in Verbindung steht. Der Frequenzumformer transformiert die relativ niedrige Frequenz des Wellenganges 4 in die entsprechende Netzfrequenz der Last, um die aus der mechanischen Wellenenergie gewonnene elektrische Energie einem Verbrauchernetz zuzuführen. Der Beschleunigungssensor 12, das Steuergerät 9 und die Generatorschaltung 6 dieser Wellenenergieanlage 1 können in dem Schwimmkörper 19 angeordnet sein.

Da ein derartiger Wellenfolger 3 in der Wellenenergieanlage 1 an einzelnen Position des Meeresspiegels die Wellenenergie in elektrische Energie wandelt, sind eine Vielzahl derartiger Wellenfolger 3 in der Wellenenergieanlage 1 zusammengefasst, wobei jeder Wellenfolger 3, der auch "Point Absorber" genannt wird, mit einem mit einem elektroaktiven Polymergenerators 2 gekoppelt ist. Die Polymergeneratoren 2 sind mit entsprechenden Beschleunigungssensor 12 ausgestattet, die die Bewegungen erfassen, um die mit Hilfe des elektroaktiven Polymergenerators 2 gewonnenen elektrische Energie zu sammeln und für die Last 11 nutzbar zu machen.

Der Beschleunigungssensor 12 kann neben linear beschleunigten Bewegungsänderungen auch mehrdimensionale Relativbewegungen wie beispielsweise beschleunigte Dreh- und Taumelbewegungsänderungen einer Wellenenergieanlage 1 erfassen.

### Bezugszeichenliste

- 1: Wellenenergieanlage
- 2: elektroaktiver Polymergenerator
- 3: Wellenfolger
- 4: Wellengang
- 5: Kondensator
- 6: Generatorschaltung
- 7: Versorgungsbatterie
- 8: Zwischenspeicher
- 9: Steuergerät
- 10: Ladebatterie
- 11: Last
- 12: Beschleunigungssensor
- 13: Umlenkelement
- 14: Ladekondensator
- 15: Elektrode
- 16: Gegenelektrode
- 17: Randseite
- 18: Randseite
- 19: Schwimmkörper
- 20: Kopplungselement
- 21: Signalleitung
- 22: Steuerleitung
- 23: Stromzuführung
- 24: Stromzuführung
- 25: DC/DC-Wandler
- 26: Frequenzumformer
- 27: Verbindungsleitung
- 29: Verbindungsleitung
- 30: Verbindungsleitung
- 31: Versorgungsleitung

## Patentansprüche

1. Elektroaktiver Polymergenerator zur Wandlung von mechanischer Energie in elektrische Energie beim Dehnen und Stauchen des Polymergenerators (2), wobei der Polymergenerator (2) eine Vorrichtung zur Erfassung von Dehnungs- und/oder Stauchungszuständen aufweist, und wobei die Vorrichtung mindestens einen Beschleunigungssensor (12) umfasst.

2. Elektroaktiver Polymergenerator nach Anspruch 1,
**dadurch gekennzeichnet,**
**dass** der elektroaktive Polymergenerator (2) ein dielektrisches Elastomer und Elektroden (15, 16) aus einem flexiblen elektrisch leitenden Material aufweist, das den Dehnungen und Stauchungen des Elastomers folgt.

3. Elektroaktiver Polymergenerator nach Anspruch 1 oder Anspruch 2,
**dadurch gekennzeichnet,**
**dass** der Beschleunigungssensor (12) bei einer Umkehr der Dehnung des elektroaktiven Polymergenerators 2 einen Maximalwert signalisiert, wobei in diesem weitgehend maximalen Dehnungszustand die generierte elektrischen Spannung auf den Elektroden (15, 16) des elektroaktiven Polymers einen Maximalwert erreicht.

4. Elektroaktiver Polymergenerator nach einem der vorhergehenden Ansprüche,
**dadurch gekennzeichnet,**
**dass** die Vorrichtung zur Erfassung von Dehnungs- und Stauchungszuständen mindestens einen dreidimensionalen Beschleunigungssensor (12) aufweist.

5. Elektroaktive Polymergeneratoranlage, mit einer Mehrzahl von Beschleunigungssensoren (12) zur Erfassung und Überwachung von komplexen mehrdimensionalen Bewegungsmustem und Dehnungszuständen von mechanisch gekoppelten elektroaktiven Polymergeneratoren (2).

6. Verwendung von elektroaktiven Polymergeneratoren (2) nach einem der Ansprüche 1 bis 4 in einer Wellenenergieanlage (1).

7. Wellenenergieanlage nach Anspruch 6,
**dadurch gekennzeichnet,**
**dass** die Wellenenergieanlage (1) mit elektroaktivem Polymergenerator (2) als Wellenfolger (3) in einem Wellengang (4) angeordnet ist und der elektroaktive Polymergenerator (2) einen Kondensator (5) mit variabler Kapazität bildet, wobei eine Generatorschaltung (6) eine Versorgungsbatterie (7) oder einen Zwischenspeicher (8) und ein Steuergerät (9) aufweist, und wobei das Steuergerät (9), abhängig von den durch mindestens einen Beschleunigungssensor erfassten Dehnungs- und Stauchungszuständen des Polymergenerators, den Kondensator lädt, entlädt und elektrische Ladungen auf den Zwischenspeicher (8) überträgt und/oder eine Ladebatterie (10) auflädt und/oder eine Last (11) speist.

8. Wellenenergieanlage nach Anspruch 6 oder Anspruch 7,
**dadurch gekennzeichnet,**
**dass** der Beschleunigungssensor (12) neben linearen beschleunigten Bewegungsänderungen mehrdimensionale Relativbewegungen wie beschleunigte Dreh- und Taumelbewegungsänderungen einer Wellenenergieanlage (1) erfasst.

9. Wellenenergieanlage nach einem der Ansprüche 7 bis 8,
**dadurch gekennzeichnet,**
**dass** das Steuergerät (9) bei Dehnungsrichtungsumkehr von dem elektroaktiven Polymergenerator (2) aus elektroaktivem Elastomer Ladungen auf den Zwischenspeicher (8) überträgt, wobei der Zwischenspeicher (8) ein Ladekondensator (14) ist.

## Claims

1. Electroactive polymer generator for converting mechanical energy into electrical energy on stretching and contraction of the polymer generator (2), wherein the polymer generator (2) comprises a device for detecting stretching and/or contraction states, and wherein the device comprises at least one acceleration sensor (12).

2. Electroactive polymer generator according to Claim 1, **characterized in that** the electroactive polymer generator (2) comprises a dielectric elastomer and electrodes (15, 16) of a flexible electrically conductive material, which follows the stretching and contraction of the elastomer.

3. Electroactive polymer generator according to Claim 1 or Claim 2, **characterized in that** the acceleration sensor (12) signals a maximum value on reversal of the stretching of the electroactive polymer generator 2, wherein in this largely maximum stretching state the generated electrical voltage at the electrodes (15, 16) of the electroactive polymer reaches a maximum value.

4. Electroactive polymer generator according to one of the preceding claims, **characterized in that** the device for detecting stretching and contraction states comprises at least one three-dimensional acceleration sensor (12).

5. Electroactive polymer generator installation, having a plurality of acceleration sensors (12) for detecting and monitoring complex multidimensional movement patterns and stretching states of mechanically coupled electroactive polymer generators (2).

6. Use of electroactive polymer generators (2) according to one of Claims 1 to 4 in a wave power installation (1).

7. Wave power installation according to Claim 6, **characterized in that** the wave power installation (1) with electroactive polymer generator (2) is arranged as a wave follower (3) in a swell (4) and the electroactive polymer generator (2) forms a capacitor (5) with variable capacitance, wherein a generator circuit (6) comprises a supply battery (7) or a buffer storage means (8) and a control device (9), and wherein the control device (9), depending on the stretching and contraction states of the polymer generator detected by at least one acceleration sensor, charges or discharges the capacitor, and transmits electrical charges to the buffer storage means (8) and/or charges a rechargeable battery (10) and/or feeds a load (11).

8. Wave power installation according to Claim 6 or Claim 7, **characterized in that** in addition to linear accelerated changes of movement, the acceleration sensor (12) also detects multidimensional relative movements such as accelerated rotational and wobbling changes of movement of a wave power installation (1).

9. Wave power installation according to one of Claims 7 or 8, **characterized in that**, on reversal of the stretching direction, the control device (9) transmits charges from the electroactive polymer generator (2) consisting of electroactive elastomer to the buffer storage means (8), wherein the buffer storage means (8) is a charging capacitor (14).

## Revendications

1. Générateur à polymère électroactif pour la conversion d'énergie mécanique en énergie électrique lors de l'expansion et de la compression du générateur à polymère (2), le générateur à polymère (2) présentant un dispositif pour détecter les états d'expansion et/ou de compression et le dispositif comprenant au moins un capteur d'accélération (12).

2. Générateur à polymère électroactif selon la revendication 1, **caractérisé en ce que** le générateur à polymère électroactif (2) présente un élastomère diélectrique et des électrodes (15, 16) en un matériau électriquement conducteur flexible qui suit les expansions et les compressions de l'élastomère.

3. Générateur à polymère électroactif selon la revendication 1 ou la revendication 2, **caractérisé en ce que** le capteur d'accélération (12) signale une valeur maximale lors d'une inversion de l'expansion du générateur à polymère électroactif (2), la tension électrique générée sur les électrodes (15, 16) du polymère électroactif dans cet état d'expansion largement maximal atteignant une valeur maximale.

4. Générateur à polymère électroactif selon l'une des revendications précédentes, **caractérisé en ce que** le dispositif pour détecter les états d'expansion et de compression présente au moins un capteur d'accélération (12) tridimensionnel.

5. Générateur à polymère électroactif comprenant une pluralité de capteurs d'accélération (12) pour la détection et la surveillance de modèles de mouvement multidimensionnels complexes et d'états d'expansion de générateurs à polymère électroactifs (2) couplés mécaniquement.

6. Utilisation de générateurs à polymère électroactifs (2) selon l'une des revendications 1 à 4 dans une centrale houlomotrice (1).

7. Centrale houlomotrice selon la revendication 6, **caractérisée en ce que** la centrale houlomotrice (1) munie d'un générateur à polymère électroactif (2) en tant que suiveur d'ondes (3) est disposée dans un trajet de houle (4) et le générateur à polymère électroactif (2) forme un condensateur (5) à capacité variable, un circuit générateur (6) présentant une batterie d'alimentation (7) ou un accumulateur intermédiaire (8) et un contrôleur (9), et le contrôleur (9), en fonction des états d'expansion et de compression du générateur à polymère détectés par au moins un capteur d'accélération, chargeant et déchargeant le condensateur et transmettant les charges électriques à l'accumulateur intermédiaire (8) et/ou chargeant une batterie de charge (10) et/ou alimentant une charge (11).

8. Centrale houlomotrice selon la revendication 6 ou 7, **caractérisée en ce que** le capteur d'accélération (12), outre des changements de mouvement accélérés linéaires, détecte des mouvements relatifs multidimensionnels tels que des changements de mouvement rotatifs et de nutation accélérés d'une centrale houlomotrice (1).

9. Centrale houlomotrice selon l'une des revendications 7 à 8, **caractérisée en ce que** le contrôleur (9), lors d'une inversion du sens de l'expansion du générateur à polymère électroactif (2), transmet des charges depuis l'élastomère électroactif sur l'accumulateur intermédiaire (8), l'accumulateur intermédiaire (8) étant un condensateur de charge (14).
